(19)

Europäisches Patentamt
European Patent Office
Office européen des brevets

(11) **EP 4 656 599 A1**

(12) **EUROPEAN PATENT APPLICATION**

(43) Date of publication:
**03.12.2025 Bulletin 2025/49**

(21) Application number: **25178063.1**

(22) Date of filing: **21.05.2025**

(51) International Patent Classification (IPC):
**C01G 53/506** (2025.01)    **C01G 53/42** (2025.01)
**H01M 4/131** (2010.01)    **H01M 4/525** (2010.01)
**H01M 10/0525** (2010.01)    **H01M 4/02** (2006.01)

(52) Cooperative Patent Classification (CPC):
**C01G 53/42; C01G 53/506; H01M 4/131;**
**H01M 4/525; H01M 10/0525;** H01M 2004/028

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **22.05.2024  KR 20240066384**

(71) Applicant: **SK On Co., Ltd.**
**Seoul 03161 (KR)**

(72) Inventors:
• **PARK, Sung Soon**
**34124 Daejeon (KR)**
• **KIM, Jong Hwa**
**34124 Daejeon (KR)**
• **YOO, Yeong Bin**
**34124 Daejeon (KR)**
• **YOON, Jeong Bae**
**34124 Daejeon (KR)**

(74) Representative: **Stolmár & Partner**
**Patentanwälte PartG mbB**
**Blumenstraße 17**
**80331 München (DE)**

(54) **CATHODE ACTIVE MATERIAL FOR SECONDARY BATTERY AND LITHIUM SECONDARY BATTERY INCLUDING THE SAME**

(57)    According to the present disclosure, there is provided a cathode active material for a secondary battery, which includes lithium transition metal oxide particles containing nickel in a content of 80 mol% or more, based on a total number of moles of elements excluding lithium and oxygen, and cobalt. An average content of cobalt in a surface portion of the particle, based on the total number of moles of elements excluding lithium and oxygen is higher than an average content of cobalt in a central portion of the particle, based on the total number of moles of elements excluding lithium and oxygen. The lithium transition metal oxide particle satisfies Equation 1-1 below.

[Equation 1-1]

$$0.2 < |S1\text{-}S2| < 1.15$$

In Equation 1-1 and Equation 1-2, S1 is an average slope of cobalt content in a region from the center of the particle to a point located 25% of the radius of the particle toward the surface. S2 is the average slope of cobalt content in a region from the surface of the particle to a point located 25% of the radius of the particle toward the center.

[FIG. 1]

EP 4 656 599 A1

**Description**

[BACKGROUND OF THE INVENTION]

1. Field of the Invention

The present disclosure provides a cathode active material for a lithium secondary battery and a lithium secondary battery including the same.

2. Description of the Related Art

A secondary battery is a battery which can be repeatedly charged and discharged. With rapid progress of information and communication, and display industries, the secondary battery has been widely applied to various portable electronic telecommunication devices such as a camcorder, a mobile phone, a laptop computer as a power source thereof. Recently, a battery pack including the secondary battery has also been developed and applied to an eco-friendly automobile such as an electric vehicle, a hybrid vehicle, etc., as a power source thereof.

Examples of the secondary battery may include a lithium secondary battery, a nickelcadmium battery, a nickel-hydrogen battery and the like. Among them, the lithium secondary battery has a high operating voltage and a high energy density per unit weight, making it advantageous in terms of charging speed and lightweight design. In this regard, the lithium secondary battery has been actively developed and applied to various industrial fields.

Recently, as subjects, to which the lithium secondary battery is applied, are expanded, longer life, high capacity and operational stability are required. For example, output characteristics and lifespan characteristics of the lithium secondary battery may be decreased according to side reactions between the cathode active material and an electrolyte of the lithium secondary battery.

To improve electrochemical characteristics of the lithium secondary battery, research on a method for adjusting contents of components or regulating the particle size of cathode active material particles is being conducted.

[SUMMARY OF THE INVENTION]

An object of the present disclosure is to provide a cathode active material for a secondary battery having improved stability.

Another object problem of the present disclosure is to provide a lithium secondary battery having improved efficiency characteristics.

To achieve the above objects, according to an aspect of the present disclosure, there is provided a cathode active material for a secondary battery including lithium transition metal oxide particles which include nickel in a content of 80 mol% or more, based on a total number of moles of elements excluding lithium and oxygen, and cobalt. Wherein an average content of cobalt in a surface portion of the particle, based on the total number of moles of elements excluding lithium and oxygen is higher than an average content of cobalt in a central portion of the particle, based on the total number of moles of elements excluding lithium and oxygen. The lithium transition metal oxide particle for a secondary battery satisfies Equation 1-1 below:

$$[\text{Equation 1-1}]$$

$$0.2 < |S1\text{-}S2| < 1.15.$$

In Equation 1-1, S1 is an average slope of cobalt content in a region from a center of the particle to a point located 25% of a radius of the lithium transition metal oxide particle toward the surface. S2 is an average slope of cobalt content in a region from the surface of the lithium transition metal oxide particle to a point located 25% of the radius of the lithium transition metal oxide particle toward the center, and the units of S1 and S2 are mol%/$\mu$m.

According to exemplary embodiments, the average content of cobalt in the surface portion of the particle, based on the total number of moles of elements excluding lithium and oxygen, may be 1 mol% to 10 mol%.

According to exemplary embodiments, the average content of cobalt in the central portion of the particle, based on the total number of moles of elements excluding lithium and oxygen, may be 3 mol% to 9 mol%.

According to exemplary embodiments, in Equation 1-1, S1 may be 0.1 mol%/$\mu$m to 2 mol%/$\mu$m.

According to exemplary embodiments, in Equation 1-1, S2 may be 0.01 mol%/$\mu$m to 2.5 mol%/$\mu$m.

According to exemplary embodiments, the lithium transition metal oxide particle may satisfy Equation 1-2 below:

[Equation 1-2]

$$0.3 < |S1\text{-}S2| < 1.$$

According to exemplary embodiments, the lithium transition metal oxide particle may include a concentration gradient region between the center and the surface of the lithium transition metal oxide particles. The nickel may have a concentration gradient in the radial direction within the concentration gradient region.

According to exemplary embodiments, a content of residual lithium in a total weight of the lithium transition metal oxide particles may be 10,000 ppm or less.

According to exemplary embodiments, the content of lithium hydroxide in the total weight of the lithium transition metal oxide particles may be 3,000 ppm or less, and the content of lithium carbonate may be 6,400 ppm or less.

According to exemplary embodiments, the average slope of the cobalt content from the surface to the center of the particle, based on the total number of moles of elements excluding lithium and oxygen, may be 0.2 mol%/μm to 2 mol%/μm.

According to exemplary embodiments, the average slope of the cobalt content from the surface to the center of the particle, based on the total number of moles of elements excluding lithium and oxygen, may be 0.5 mol%/μm to 1.5 mol%/μm.

According to exemplary embodiments, the lithium transition metal oxide particle may have a single crystal structure.

According to another aspect of the present disclosure, there is provided a lithium secondary battery including: a cathode which includes the cathode active material for a secondary battery; and an anode disposed to face the cathode.

The lithium transition metal oxide particles according to exemplary embodiments of the present disclosure may include a cobalt concentration gradient region within the particles. Accordingly, structural stability and mechanical properties of the lithium transition metal oxide particles may be improved.

According to exemplary embodiments, a content of the residual lithium in the lithium transition metal oxide particles may be reduced. Therefore, a secondary battery having improved lifespan characteristics may be implemented.

The cathode active material for a secondary battery of the present disclosure and the lithium secondary battery including the same may be widely applied in green technology fields, such as electric vehicles, battery charging stations, as well as solar power generation, wind power generation, and the like, which use the batteries. The cathode active material for a secondary battery of the present disclosure and the lithium secondary battery including the same may be used in eco-friendly electric vehicles, hybrid vehicles, and the like, which are aimed at mitigating climate change by reducing air pollution and greenhouse gas emission.

[BRIEF DESCRIPTION OF THE DRAWINGS]

The above and other objects, features and other advantages of the present disclosure will be more clearly understood from the following detailed description taken in conjunction with the accompanying drawings, in which:

FIGS. 1 and 2 are a schematic plan view and a cross-sectional view of a lithium secondary battery according to exemplary embodiments, respectively; and
FIG. 3 is a schematic view illustrating points at which the Co content is measured in the cross-section of lithium transition metal oxide particles of the examples and comparative examples.

[DETAILED DESCRIPTION OF THE INVENTION]

Exemplary embodiments according to the present disclosure provide a cathode active material for a secondary battery (hereinafter, may be abbreviated as a "cathode active material"), which has a cobalt concentration gradient. In addition, a lithium secondary battery (hereinafter, may be abbreviated as a "secondary battery") including the cathode active material is provided.

Hereinafter, the embodiments of the present disclosure will be described in detail. However, these embodiments are merely examples, and the present disclosure is not limited to the specific embodiments described as the example.

According to exemplary embodiments, the cathode active material includes lithium transition metal oxide particles. The lithium transition metal oxide includes nickel and cobalt, and may further include manganese and/or aluminum.

The lithium transition metal oxide particles include nickel (Ni) in a content of 80 mol% or more, based on a total number of moles of elements excluding lithium and oxygen. In some embodiments, the content of nickel in the lithium transition metal oxide particles, based on the total number of moles of elements excluding lithium and oxygen, may be 85 mol% or more, 87 mol% or more, or 90 mol% or more.

For example, the content of nickel at all points of the lithium transition metal oxide particle may be 80 mol% or more, based on the total number of moles of elements excluding lithium and oxygen. In some embodiments, the content of nickel at a central portion of the lithium transition metal oxide particle, based on the total number of moles of elements excluding lithium and oxygen, may be 80 mol% or more.

If the content of nickel in the lithium transition metal oxide particle is less than 80 mol%, a battery having a sufficiently high capacity may not be implemented.

In the present specification, the "central portion" of the particle may include a center of the particle and a region from the center to a point located about 30% or less of particle's radius in the radial direction. For example, the central portion of the particle may include a region from the center of the particle to a point located about 25% or less, 20% or less, or 15% or less of the particle's radius in the radial direction.

For example, when the particle has an irregular shape, the center of the particle may be defined as the center of mass or the center of volume.

Nickel may be provided as a transition metal associated with the output and capacity of the lithium secondary battery. Therefore, as described above, by employing a high-content (High-Ni) composition in the cathode active material, a high-capacity cathode and a high-capacity lithium secondary battery may be provided.

As the content of Ni increases, long-term storage stability and lifespan stability of the cathode or the secondary battery may be relatively decreased, and side reactions with the electrolyte may also be increased. However, according to exemplary embodiments, by adjusting a slope of change in the cobalt content within the lithium transition metal oxide particles, the structural stability of the cathode active material may be improved. Accordingly, a lithium secondary battery having improved lifespan characteristics may be implemented.

According to exemplary embodiments, the cobalt content in a surface portion of the particle is higher than the cobalt content in the central portion of the particle.

According to exemplary embodiments, an average content of cobalt in the surface portion of the particle, based on the total number of moles of elements excluding lithium and oxygen is higher than the average content of cobalt in the central portion of the particle, based on the total number of moles of elements excluding lithium and oxygen. Accordingly, the nickel content in the surface portion of the particle may be relatively reduced, thereby suppressing side reactions with the electrolyte in the surface portion of the particle.

In this specification, the "surface portion" of a particle may include a region from an outer circumference of the particle to a point located about 30% or less of the particle's radius toward the center. For example, the surface portion of the particle may include a region from the outer circumference of the particle to a point located about 25% or less, 20% or less, or 15% or less of the particle's radius toward the center.

In this specification, the "cobalt content" may refer to the content of cobalt in the lithium transition metal oxide, based on the total number of moles of elements excluding lithium and oxygen. For example, the cobalt content may be measured from a cross-section of the particle which is cut to include the center of the particle. For example, the lithium transition metal oxide particle may be cut by ion milling, and the cross-section may be cut to include the center of the particle.

For the cross-section of the particle, the cobalt content may be measured using a combination of energy dispersive X-ray spectroscopy (EDX) and field emission scanning electron microscopy (FE-SEM). For example, a cross-sectional image of the particle may be captured using FE-SEM, and the cobalt content may be measured using EDX analysis at multiple points at a predetermined interval in the radial direction from the center point to the surface point of the particle.

For example, the FE-SEM imaging conditions may be set to 5 kV and 0.1 nA, with Thermofisher Apreo used as imaging equipment.

For example, the EDX analysis conditions may be set to 10 kV, 0.4 nA, with Oxford EDS detector used as analysis equipment.

For example, the average content of cobalt in the surface portion of the particle, based on the total number of moles of elements excluding lithium and oxygen may be calculated as an average value of the cobalt content in the particle surface and the cobalt content at a point located about 25% of the particle's radius toward the center from the outer circumference of the particle.

For example, the average content of cobalt in the central portion of the particle, based on the total number of moles of elements excluding lithium and oxygen may be calculated as the average value of the cobalt content at the center of the particle and the cobalt content at a point located about 25% of the particle's radius in the radial direction from the center of the particle.

According to exemplary embodiments, the average content of cobalt in the surface portion of the particle, based on the total number of moles of elements excluding lithium and oxygen, may be 1 mol% to 10 mol%. According to some embodiments, the average content of cobalt in the surface portion of the particle, based on the total number of moles of elements excluding lithium and oxygen, may be 5 mol% to 10 mol%.

According to exemplary embodiments, the average content of cobalt in the central portion of the particle, based on the total number of moles of elements excluding lithium and oxygen, may be 3 mol% to 9 mol%. According to some embodiments, the average content of cobalt in the central portion of the particle, based on the total number of moles of elements excluding lithium and oxygen, may be 4 mol% to 8 mol%,.

According to exemplary embodiments, the cathode active material for a secondary battery satisfies Equation 1-1 below. According to exemplary embodiments, the cathode active material for a secondary battery may satisfy Equation 1-2 below.

$$[\text{Equation 1-1}]$$

$$0.2 < |S1\text{-}S2| < 1.15$$

$$[\text{Equation 1-2}]$$

$$0.3 < |S1\text{-}S2| < 1$$

In Equation 1-1 and Equation 1-2, S1 is an average slope of cobalt content in a region from the center of the particle to a point located 25% of the radius of the cathode active material toward the surface. S2 is the average slope of cobalt content in a region from the surface of the cathode active material to a point located 25% of the radius of the cathode active material toward the center.

Accordingly, since the cobalt concentration gradient in the lithium transition metal oxide particle is appropriately maintained, a difference in lattice structure deformation between the surface portion and the central portion of the particle may be minimized, thereby improving the stability of the cathode active material. In addition, a decrease in capacity during repeated charge and discharge of the lithium secondary battery including the cathode active material may be prevented, thereby improving the lifespan characteristics of the battery.

If the difference (|S1-S2|) in the average slope of cobalt contents between the surface portion and the central portion of Equation 1-1 is less than 0.2, the capacity of the battery may be decreased and the charge/discharge efficiency of the battery may be reduced.

When |S1-S2| of Equation 1-1 exceeds 1.15, the content of nickel in the lithium transition metal oxide may reduce, thereby preventing a sufficient increase in the capacity of the cathode.

According to exemplary embodiments, |S1-S2| may be greater than 0.2 and less than 1.15, greater than 0.3 and less than 1, or 0.34 to 0.6.

S1 of Equation 1-1 may be defined by Equation 2 below.

$$[\text{Equation 2}]$$

$$S1 = (C_1\text{-}C_{center})/ (0.25 * D)$$

In Equation 2, $C_1$ may be a cobalt content at a point located 25% of a radius of the particle in the radial direction from the center of the particle, $C_{center}$ may be a cobalt content at the center of the particle, and D may be a radius of the particle.

According to exemplary embodiments, S1 may be 0.1 mol%/$\mu$m to 2 mol%/$\mu$m. According to some embodiments, S1 may be 0.3 mol%/$\mu$m to 1.7 mol%/$\mu$m, or 0.5 mol%/$\mu$m to 1.65 mol%/$\mu$m.

S2 of Equation 1-1 may be defined by Equation 3 below.

$$[\text{Equation 3}]$$

$$S2 = (C_s\text{-}C_2)/ (0.25 * D)$$

In Equation 3, $C_s$ may be a cobalt content at the surface of the particle, $C_2$ may be a cobalt content at a point located 25% of the radius of the particle from the surface of the particle toward the center, and D may be the radius of the particle.

According to exemplary embodiments, S2 may be 0.01 mol%/$\mu$m to 2.5 mol%/$\mu$m. According to some embodiments, S2 may be 0.2 mol%/$\mu$m to 2.3 mol%/$\mu$m, or 0.35 mol%/$\mu$m to 2.1 mol%/$\mu$m.

According to exemplary embodiments, an average slope of the cobalt content from the surface to the center of the particle, based on the total number of moles of elements excluding lithium and oxygen, may be 0.2 mol%/μm to 2 mol%/μm. According to some embodiments, the average slope of cobalt content from the surface to the center of the particle, based on the total number of moles of elements excluding lithium and oxygen, may be 0.5 mol%/μm to 1.5 mol%/μm.

The average slope of the cobalt content from the surface to the center of the particle, based on the total number of moles of elements excluding lithium and oxygen may be a value obtained by dividing a difference value between the cobalt content at the center of the particle and the cobalt content at the surface of the particle by the particle's radius.

According to exemplary embodiments, the lithium transition metal oxide particle may include a concentration gradient region between the center and the surface thereof. Nickel may have a concentration gradient in the radial direction within the above concentration gradient region. For example, within the above concentration gradient region, the nickel content may decrease from the center toward the surface portion.

For example, the difference between the nickel content at the center of the lithium transition metal oxide particle and the nickel content at the surface of the lithium transition metal oxide particle may be about 5 mol% or less.

In some embodiments, the cathode active material or the lithium transition metal oxide particle may include a layered structure or a crystal structure represented by Formula 1 below.

$$[\text{Formula 1}] \quad \text{Li}_x\text{Ni}_a\text{M}_b\text{O}_{2+z}$$

In Formula 1, x, a, b and z may satisfy $0.9 \le x \le 1.2$, $0.75 \le a \le 0.99$, $0.01 \le b \le 0.25$, $-0.5 \le z \le 0.1$. As described above, M includes Co and may further include Mn and/or Al.

The chemical structure represented by Formula 1 indicates a bonding relationship between elements included in the layered structure or crystal structure of the cathode active material or the lithium transition metal oxide particle and does not exclude other additional elements. For example, M includes Co and/or Mn, and Co and Mn may be provided as main active elements of the cathode active material together with Ni. Here, it should be understood that Formula 1 is provided to express the bonding relationship between the main active elements, and is a formula encompassing introduction and substitution of the additional elements.

In one embodiment, the cathode active material may further include auxiliary elements which are added to the main active elements, thus to enhance chemical stability thereof or the layered structure/crystal structure. The auxiliary element may be incorporated into the layered structure/crystal structure together to form a bond, and it should be understood that this case is also included within the chemical structure represented by Formula 1.

The auxiliary element may include at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr, for example. The auxiliary element may act as an auxiliary active element which contributes to the capacity/output activity of the cathode active material together with Co or Mn like Al.

For example, the cathode active material or the lithium transition metal oxide particle may include a layered structure or crystal structure represented by Formula 1-1 below.

$$[\text{Formula 1-1}] \quad \text{Li}_x\text{Ni}_a\text{M1}_{b1}\text{M2}_{b2}\text{O}_{2+z}$$

In Formula 1-1, M1 may include Co, Mn and/or Al. M2 may include the above-described auxiliary elements. In Formula 1-1, x, a, b1, b2 and z may satisfy $0.9 \le x \le 1.2$, $0.75 \le a \le 0.99$, $0.01 \le b1+b2 \le 0.25$, $-0.5 \le z \le 0.1$.

The cathode active material may further include a doping element. For example, elements which are substantially the same as or similar to the above-described auxiliary elements may be used as the doping element. For example, the above-described elements may be used alone or in combination of two or more thereof.

The doping element may be exist on the surface of the lithium transition metal oxide particles, or may penetrate through the surface of the lithium transition metal oxide particles to become incorporated into the bonding structure represented by Formula 1 or Formula 1-1 by above.

The cathode active material may include a nickel-cobalt-manganese (NCM)-based lithium oxide. In this case, an NCM-based lithium oxide with an increased nickel content may be used.

According to exemplary embodiments, the content of residual lithium in a total weight of the lithium transition metal oxide particles may be 10,000 ppm or less. According to some embodiments, the content of residual lithium in the total weight of the lithium transition metal oxide particles may be 9,500 ppm or less, 9,000 ppm or less, 8,000 ppm or less, 7,000 ppm or less, or 6,000 ppm or less.

The residual lithium may be an unreacted component or a byproduct of the lithium source used in the preparation of the cathode active material. For example, when employing a high-nickel (high-Ni) composition with a nickel content of 80 mol% or more, calcination may be performed at a relatively low temperature during the preparation of the lithium transition metal composite oxide particles. In this case, the amount of residual lithium on the surface of the lithium transition metal composite oxide particles may be increased.

However, the content of residual lithium in the cathode active material that satisfies the above-described Equation 1-1 may be reduced, and a decrease in lifespan characteristics of the battery caused by residual lithium may be prevented.

According to exemplary embodiments, a content of lithium hydroxide in the total weight of the lithium transition metal oxide particles may be 3000 ppm or less. According to some embodiments, the content of lithium hydroxide in the total weight of the lithium transition metal oxide particles may be 2700 ppm or less.

According to exemplary embodiments, the content of lithium carbonate in the total weight of the lithium transition metal oxide particles may be 6400 ppm or less. According to some embodiments, the content of lithium carbonate in the total weight of the lithium transition metal oxide particles may be 6300 ppm or less or 5000 ppm or less.

According to exemplary embodiments, the lithium transition metal oxide particles may have a median particle diameter (D50) of 0.01 $\mu$m to 20 $\mu$m. According to some embodiments, the lithium transition metal oxide particles may have a median particle diameter (D50) of 1 $\mu$m to 10 $\mu$m. The median particle diameter (D50) may refer to a particle diameter value at which 50% of the volume-based cumulative distribution is reached.

According to exemplary embodiments, the lithium transition metal oxide particles may have a single particle form. The single particle may be morphologically distinguished from a secondary particle. For example, the single particle and the secondary particle may be distinguished based on a cross-sectional image of the particle obtained using a scanning electron microscope (SEM).

For example, the secondary particle may refers to a particle in which a plurality of primary particles are aggregated and substantially regarded or observed as one particle. For example, in the case of the secondary particle, boundaries of the primary particles may be observed in the SEM cross-sectional image.

For example, the single particle may refer to a monolith rather than an aggregate. For example, in the case of the single particle, unlike the secondary particle, the boundaries of the primary particles may not be observed in the SEM cross-sectional image.

Meanwhile, fine particles (such as particles with a volume of 1/100 or less relative to the volume of the single particle) may be attached to the surface of the single particles. However, this form is not excluded from the concept of the single particle.

For example, the single particles may exist in contact with one another. For example, 2 to 10, 2 to 5, or 2 to 3 single particles may exist in contact with one another.

According to exemplary embodiments, the lithium transition metal oxide particles may have a single crystal structure. For example, if the single particle has the single crystal structure, the single particle may be composed of one single crystal. In contrast, if the single particle has a polycrystalline structure, for example, the single particle may include two or more single crystals.

For example, the single crystal structure may be identified based on an ion image obtained by analyzing a particle cross-section using a focused ion beam (FIB). For example, if the particle has a single crystal structure, one crystal may be observed in the FIB analysis image due to differences in crystal orientation.

According to exemplary embodiments, a method for preparing the cathode active material may be provided.

For example, a transition metal precursor containing nickel and a lithium precursor may react to prepare a preliminary lithium transition metal oxide particles. The transition metal precursor (e.g., a Ni-Co-Mn precursor) may be prepared through a co-precipitation reaction, etc.

For example, the transition metal precursor may be prepared through a co-precipitation reaction of metal salts. These metal salts include nickel salts and cobalt salts, and may further include manganese salts and/or aluminum salts.

The nickel salts may include nickel sulfate, nickel hydroxide, nickel nitrate, nickel acetate, and a hydrate thereof, etc. Examples of the manganese salt may include manganese sulfate, manganese acetate, and a hydrate thereof, etc. Examples of the cobalt salt may include cobalt sulfate, cobalt nitrate, cobalt carbonate, and a hydrate thereof, etc. These may be used alone or in combination of two or more thereof.

The metal salts may be mixed with a precipitant and/or a chelating agent in a ratio that satisfies the content of each metal or the concentration ratios described with reference to Formula 1 to prepare an aqueous solution. The aqueous solution may be subj ected to co-precipitation in a reactor to prepare the transition metal precursor.

The precipitant may include an alkaline compound such as sodium hydroxide (NaOH), sodium carbonate ($Na_2CO_3$) and the like. The chelating agent may include, for example, ammonium hydroxide (e.g., $NH_3H_2O$), ammonium carbonate (e.g., $NH_4HCO_3$) and the like.

For example, the co-precipitation reaction may be performed at a temperature of about 40 °C to 60 °C for about 24 hours to 72 hours.

The lithium precursor compound may include, for example, lithium carbonate, lithium nitrate, lithium acetate, lithium oxide, lithium hydroxide, etc. These compounds may be used alone or in combination of two or more thereof.

In exemplary embodiments, a mixture of the preliminary lithium transition metal oxide particles and the cobalt salt compound may be calcined to form lithium transition metal oxide particles. The mixture may be prepared by dry mixing the preliminary lithium transition metal oxide particles and the cobalt salt compound.

The cobalt salt compound may be mixed so that the cobalt atom content ranges from 0.01 to 0.5 parts by weight ("wt parts"), based on 100 wt parts of the preliminary lithium transition metal oxide particles.

The cobalt salt compound may be mixed so that the cobalt atom content ranges from 1000 ppm to 50,000 ppm, based on 100 wt parts of the preliminary lithium transition metal oxide particles. In some embodiments, the cobalt salt compound may be mixed so that the cobalt atom content ranges from 5000 ppm to 20,000 ppm, based on 100 wt parts of the preliminary lithium transition metal oxide particles.

The calcination may be performed, for example, at a temperature of 500 °C to 1000 °C for about 5 hours to 20 hours.

The lithium transition metal oxide particles may have a concentration gradient of cobalt within the particles.

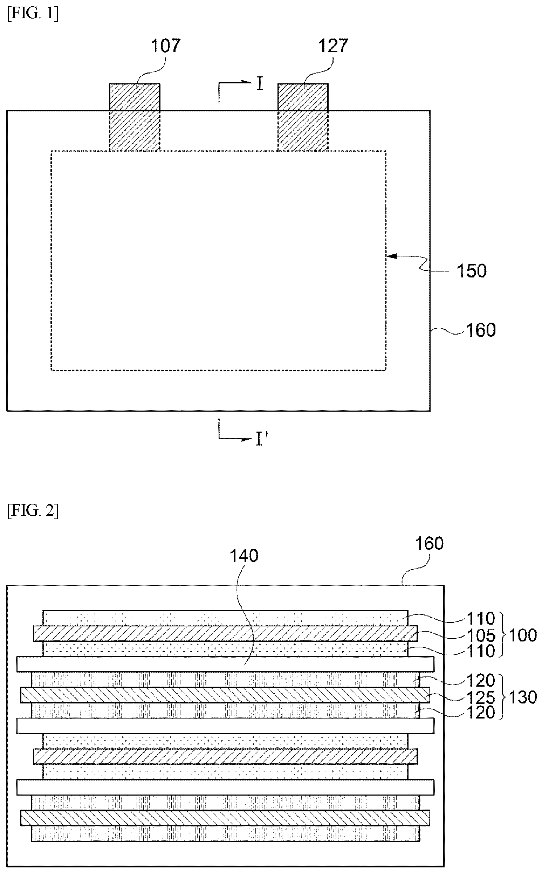

FIGS. 1 and 2 are a schematic plan view and a cross-sectional view illustrating a lithium secondary battery according to exemplary embodiments, respectively. For example, FIG. 2 is a cross-sectional view taken on line I-I' of FIG. 1 in a thickness direction of the lithium secondary battery.

Referring to FIGS. 1 and 2, the lithium secondary battery may include a cathode 100 including the above-described cathode active material and an anode 130 disposed to face the cathode 100.

The cathode 100 may include a cathode active material layer 110 formed by applying a cathode active material to at least one surface of a cathode current collector 105.

The cathode current collector 105 may include stainless steel, nickel, aluminum, titanium or an alloy thereof. The cathode current collector 105 may also include aluminum or stainless steel subj ected to surface treatment with carbon, nickel, titanium or silver. For example, the cathode current collector 105 may have a thickness of 10 to 50 $\mu$m.

The cathode active material layer 110 may include the above-described cathode active material.

The cathode active material may include a plurality of the lithium transition metal oxide particles. For example, a total content of the lithium metal oxide particles based on a total weight of the cathode active material may be 50 wt% or more. In some embodiments, the total content of the lithium transition metal oxide particles based on the total weight of the cathode active material may be 60 wt% or more, 70 wt% or more, 80 wt% or more, or 90 wt% or more.

In one embodiment, the cathode active material may be substantially composed of the lithium transition metal oxide particles.

The cathode active material may be mixed in a solvent to prepare a cathode slurry. The cathode slurry may be applied to at least one surface of the cathode current collector 105, followed by drying and pressing the same to prepare the cathode active material layer 110. The coating may include a method such as gravure coating, slot die coating, simultaneous multilayer die coating, imprinting, doctor blade coating, dip coating, bar coating or casting. The cathode active material layer 110 may further include a binder, and optionally further include a conductive material, a thickener or the like.

As the solvent, N-methyl-2-pyrrolidone (NMP), dimethylformamide, dimethylacetamide, N,N-dimethylaminopropylamine, ethylene oxide, tetrahydrofuran, and the like may be used.

The binder may include polyvinylidene fluoride (PVDF), poly(vinylidene fluoride-co-hexafluoropropylene), polyacrylonitrile, polymethylmethacrylate, acrylonitrile butadiene rubber (NBR), polybutadiene rubber (BR), styrene-butadiene rubber (SBR) and the like. These may be used alone or in combination of two or more thereof.

In one embodiment, a PVDF-based binder may be used as the cathode binder. In this case, the amount of binder for forming the cathode active material layer 110 may be decreased and the amount of the cathode active material may be relatively increased. Accordingly, the output characteristics and capacity characteristics of the secondary battery may be improved.

The conductive material may be added to the cathode active material layer 110 in order to enhance the conductivity thereof and/or the mobility of lithium ions or electrons. For example, the conductive material may include a carbon-based conductive material such as graphite, carbon black (e.g., Denka Black), acetylene black, Ketjen black, graphene, vapor-grown carbon fibers (VGCFs), carbon fibers, and/or a metal-based conductive material including tin, tin oxide, titanium oxide, or a perovskite material such as $LaSrCoO_3$, and $LaSrMnO_3$. These may be used alone or in combination of two or more thereof.

The cathode slurry may further include a thickener and/or dispersant. In one embodiment, the cathode slurry may include a thickener such as carboxymethyl cellulose (CMC).

The anode 130 may include an anode current collector 125, and an anode active material layer 120 formed on at least one surface of the anode current collector 125.

For example, the anode current collector 125 may include a copper foil, a nickel foil, a stainless steel foil, a titanium foil, a nickel foam, a copper foam, a polymer substrate coated with conductive metal and the like. These may be used alone or in combination of two or more. For example, the anode current collector 125 may have a thickness of 10 $\mu$m to 50 $\mu$m.

The anode active material layer 120 may include an anode active material. As the anode active material, a material capable of intercalating and deintercalating lithium ions may be used. For example, as the anode active material, carbon-based materials such as crystalline carbon, amorphous carbon, a carbon composite, or carbon fibers, etc.; lithium metal; a lithium alloy; a silicon (Si)-containing material or a tin (Sn)-containing material, etc. may be used. These may be used alone or in combination of two or more thereof.

The amorphous carbon may include hard carbon, soft carbon, cokes, mesocarbon microbead (MCMB), mesophase pitch-based carbon fiber (MPCF) or the like.

The crystalline carbon may include graphite-based carbon such as natural graphite, artificial graphite, graphite cokes, graphite MCMB, graphite MPCF or the like.

The lithium metal may include pure lithium metal and/or lithium metal having a protective layer formed thereon for suppressing dendrite growth and the like. In one embodiment, a lithium metal-containing layer deposited or applied to the anode current collector 125 may also be used as the anode active material layer 120. In one embodiment, a lithium thin film layer may also be used as the anode active material layer 120.

Elements contained in the lithium alloy may include aluminum, zinc, bismuth, cadmium, antimony, silicon, lead, tin, gallium, indium, etc. These may be used alone or in combination of two or more thereof.

The silicon-containing material may provide further increased capacity characteristics. The silicon-containing material may include Si, $SiO_x(0<x<2)$, metal-doped $SiO_x(0<x<2)$, a silicon-carbon composite, etc.

The metal may include lithium and/or magnesium, and the metal-doped $SiO_x(0<x<2)$ may include a metal silicate.

The anode active material may be mixed in a solvent to prepare an anode slurry. The anode slurry may be applied/deposited to the anode current collector 125, followed by drying and pressing the same to prepare the anode active material layer 120. The coating may include a method such as gravure coating, slot die coating, simultaneous multilayer die coating, imprinting, doctor blade coating, dip coating, bar coating or casting, etc. The anode active material layer 120 may further include a binder, and optionally further include a conductive material, a thickener or the like.

The solvent included in the anode slurry may include water, pure water, deionized water, distilled water, ethanol, isopropanol, methanol, acetone, n-propanol, t-butanol and the like. These may be used alone or in combination of two or more thereof.

The above-described materials that can be used when preparing the cathode 100 as the binder, conductive material and thickener may be used.

In some embodiments, a styrene-butadiene rubber (SBR)-based binder, carboxymethyl cellulose (CMC), polyacrylic acid-based binder, poly(3,4-ethylenedioxythiophene, PEDOT)-based binder, and the like may be used as an anode binder. These may be used alone or in combination of two or more thereof.

In exemplary embodiments, a separation membrane 140 may be interposed between the cathode 100 and the anode 130. The separation membrane 140 may be configured to prevent an electrical short-circuit between the cathode 100 and the anode 130, and to allow a flow of ions to occur. For example, the separation membrane may have a thickness of 10 $\mu$m to 20 $\mu$m.

For example, the separation membrane 140 may include a porous polymer film or a porous nonwoven fabric.

The porous polymer film may include a polyolefin polymer such as an ethylene polymer, a propylene polymer, an ethylene/butene copolymer, an ethylene/hexene copolymer, and an ethylene/methacrylate copolymer, etc. These may be used alone or in combination of two or more thereof.

The porous nonwoven fabric may include glass fibers having a high melting point, polyethylene terephthalate fibers and the like.

The separation membrane 140 may also include a ceramic-based material. For example, inorganic particles may be applied to the polymer film or dispersed within the polymer film to improve heat resistance.

The separation membrane 140 may have a single-layer or multi-layer structure including the above-described polymer film and/or non-woven fabric.

According to exemplary embodiments, an electrode cell is defined by the cathode 100, the anode 130 and the separation membrane 140, and a plurality of electrode cells are stacked to form, for example, a jelly roll type electrode assembly 150. For example, the electrode assembly 150 may be formed by winding, stacking, z-folding, stack-folding, etc. of the separation membrane 140.

The electrode assembly 150 may be housed in a case 160 together with the electrolyte to define a lithium secondary battery. According to exemplary embodiments, a non-aqueous electrolyte may be used as the electrolyte.

The non-aqueous electrolyte includes a lithium salt of an electrolyte and an organic solvent, the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

As the organic solvent, for example, propylene carbonate (PC), ethylene carbonate (EC), butylene carbonate, diethyl carbonate (DEC), dimethyl carbonate (DMC), ethyl methyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), tetrahydrofuran (THF), 2-methyltetrahydrofuran, ethyl alcohol, isopropyl alcohol, dimethyl sulfur oxide, acetonitrile, dimethoxyethane, diethoxyethane, sulfolane, gamma-butyrolactone, and propylene sulfite, and the like may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like. These may be used alone or in combination of two or more thereof.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis-oxalato phosphate, lithium difluoro phosphate, etc.

The borate compound may include lithium bis(oxalate) borate, etc.

In some embodiments, a solid electrolyte may also be used instead of the above-described non-aqueous electrolyte. In this case, the lithium secondary battery may be manufactured in the form of an all-solid-state battery. In addition, a solid electrolyte layer may also be disposed between the cathode 100 and the anode 130 instead of the above-described separation membrane 140.

The solid electrolyte may include a sulfide-based electrolyte. As a non-limiting example, the sulfide-based electrolyte may include $Li_2S-P_2S_5$, $Li_2S-P_2S_5-LiCl$, $Li_2S-P_2S_5-LiBr$, $Li_2S-P_2S_5-LiCl-LiBr$, $Li_2S-P_2S_5-Li2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (m and n are positive numbers, Z is Ge, Zn or Ga), $Li_2S-GeS_2$, $Li_2S-SiS_2-Li_3PO_4$, $Li_2S-SiS_2-Li_pMO_q$ (p and q are positive numbers, M is P, Si, Ge, B, Al, Ga or In), $Li_7-xPS_6-xCl_x$ ($0 \leq x \leq 2$), $Li_7-xPS_6-xBr_x$ ($0 \leq x \leq 2$), $Li_7-xPS_6-xI_x$ ($0 \leq x \leq 2$), etc. These may be used alone or in combination of two or more thereof.

In one embodiment, the solid electrolyte may also include an oxide-based amorphous solid electrolyte, such as, for example, $Li_2O-B_2O_3-P_2O_5$, $Li_2O-SiO_2$, $Li_2O-B_2O_3$, $Li_2O-B_2O_3-ZnO$, etc.

As shown in FIGS. 1 and 2, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead 107 and an anode lead 127) extending or exposed to an outside of the case 160.

The lithium secondary battery may be manufactured, for example, in a cylindrical shape using a can, a square shape, a pouch shape or a coin shape.

Hereinafter, embodiments of the present disclosure will be further described with reference to specific experimental examples. However, the following examples and comparative examples included in the experimental examples are only given for illustrating the present disclosure and those skilled in the art will obviously understand that various alterations and modifications are possible within the scope and spirit of the present disclosure. Such alterations and modifications are duly included in the appended claims.

## Example 1

$Ni_{0.9}Co_{0.05}M_{0.05}(OH)_2$ precursor and lithium hydroxide were mixed in a dry mixer so that a molar ratio of Li/(Ni+Co+Mn) was 1.02 to prepare a mixture. The mixture was calcined at about 800 °C for 10 hours, followed by pulverization and classification, to synthesize a preliminary lithium transition metal oxide ($LiNi_{0.9}Co_{0.05}Mn_{0.05}O_2$).

A mixture was prepared by adding 0.8 wt parts (Co 5,000 ppm) of cobalt hydroxide ($Co(OH)_2$) powder to 100 wt parts of the preliminary lithium transition metal oxide, followed by dry mixing. The mixture was calcined at 700 °C for 10 hours, followed by pulverization and classification, to prepare a lithium transition metal oxide (D50: 4 $\mu$m).

## Example 2

A lithium transition metal oxide (D50: 4 $\mu$m) was prepared in the same manner as in Example 1, except that cobalt hydroxide ($Co(OH)_2$) powder was used in an amount of 1.6 wt parts (Co 10,000 ppm), based on 100 wt parts of the preliminary lithium transition metal oxide.

## Example 3

A lithium transition metal oxide (D50: 4 $\mu$m) was prepared in the same manner as in Example 1, except that cobalt hydroxide ($Co(OH)_2$) powder was used in an amount of 2.4 wt parts (Co 15,000 ppm), based on 100 wt parts of the preliminary lithium transition metal oxide.

### Example 4

A lithium transition metal oxide (D50: 4 $\mu$m) was prepared in the same manner as in Example 1, except that the cobalt hydroxide (Co(OH)$_2$) powder was used in an amount of 3.2 wt parts (Co 20,000 ppm), based on 100 wt parts of the preliminary lithium transition metal oxide.

### Comparative Example 1

A lithium transition metal oxide (D50: 4 $\mu$m)was prepared in the same manner as in Example 1, except that the cobalt hydroxide (Co(OH)$_2$) was not dry-mixed with the preliminary lithium transition metal oxide.

### Comparative Example 2

A lithium transition metal oxide (D50: 4 $\mu$m) was prepared in the same manner as in Example 1, except that the cobalt hydroxide (Co(OH)$_2$) powder was used in an amount of 8 wt parts (Co 50,000 ppm), based on 100 wt parts of the preliminary lithium transition metal oxide.

### Comparative Example 3

A lithium transition metal oxide (D50: 4 $\mu$m) was prepared in the same manner as in Example 1, except that cobalt hydroxide (Co(OH)$_2$) powder was used in an amount of 0.16 wt parts (Co 1,000 ppm), based on 100 wt parts of the preliminary lithium transition metal oxide.

### Experimental Example 1: Measurement of Co content in particles

The lithium transition metal oxide particles of the examples and comparative examples were cut using ion-milling to ensure that the cross-section included the center of the particle, and the cobalt (Co) content in the cross-section was measured using a combination of energy dispersive X-ray spectroscopy (EDX) and field emission scanning electron microscopy (FE-SEM). Specifically, particles having a median particle diameter (d50) of 4 $\mu$m were selected among the lithium transition metal oxide particles of the examples and comparative examples. After confirming the cross-sectional image of the selected particles using FE-SEM, the Co content was measured using EDX analysis at the following total five points at intervals of 25% (0.5 $\mu$m) of the radius from the center to the surface: (1) the center, (2) a point located 25% of the radius from the center, (3) a point located 50% of the radius from the center, (4) a point located 75% of the radius from the center, and (5) the surface.

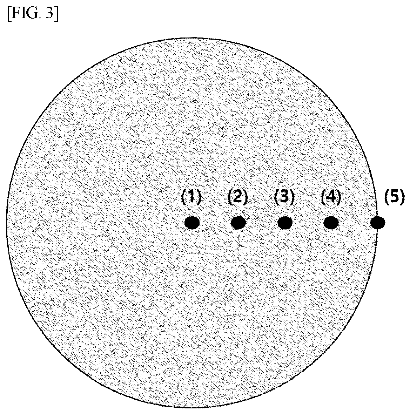

FIG. 3 is a schematic view illustrating points at which the Co content is measured in the cross-section of lithium transition metal oxide particles of the examples and comparative examples.

Measurement results are shown in Table 1.

[TABLE 1]

| | Co content (mol%) | | | | | Co content slope (mol%/$\mu$m) | | | Residual lithium content (ppm) | |
|---|---|---|---|---|---|---|---|---|---|---|
| | (1) | (2) | (3) | (4) | (5) | S1 | S2 | 1S1-S2l | LiOH | Li$_2$CO$_3$ |
| Example 1 | 5.00 | 5.36 | 5.62 | 5.84 | 6.03 | 0.72 | 0.38 | 0.34 | 2660 | 6290 |
| Example 2 | 5.12 | 5.43 | 5.72 | 6.15 | 6.74 | 0.62 | 1.18 | 0.56 | 2700 | 4310 |
| Example 3 | 5.32 | 5.84 | 6.27 | 6.89 | 7.62 | 1.04 | 1.46 | 0.42 | 2430 | 4320 |
| Example 4 | 5.57 | 6.38 | 6.74 | 7.21 | 8.24 | 1.62 | 2.06 | 0.44 | 2590 | 3150 |
| Comparative Example 1 | 4.98 | 5.12 | 5.35 | 5.31 | 5.37 | 0.28 | 0.12 | 0.16 | 3780 | 6480 |
| Comparative Example 2 | 5.89 | 7.14 | 8.62 | 9.78 | 11.62 | 2.5 | 3.68 | 1.18 | 2410 | 2180 |
| Comparative Example 3 | 4.99 | 5.15 | 5.32 | 5.41 | 5.65 | 0.32 | 0.48 | 0.16 | 3560 | 6310 |

Referring to Table 1 above, the lithium transition metal oxide particles of the examples satisfied Equation 1, whereas the lithium transition metal oxide particles of the comparative examples did not satisfy Equation 1.

**Experimental Example 2: Measurement of residual lithium content in particles**

2.5 g of the lithium transition metal oxide particles of the examples and comparative examples and 100 g of pure water were placed in a 100 ml beaker, and stirred for 10 minutes. The lithium metal composite oxide particles were filtered, and 0.1 M hydrochloric acid aqueous solution was added dropwi se to the remaining 60 g of the filtrate, then the pH of the filtrate was measured using a pH meter at 25°C. The amount of hydrochloric acid added dropwise until the pH reached 8.3 $\pm$0.1 was designated as A (ml), and the amount of hydrochloric acid added dropwise until the pH reached 4.5$\pm$0.1 was designated as B (ml), and the contents of lithium carbonate and lithium hydroxide remaining in the lithium transition metal oxide particles were calculated using Equation 4 and Equation 5 below.

[Equation 4]

$$\text{Lithium carbonate content} = (B-A) \times \{M_{Li2CO3}/(20 \times 60/100)\}$$

[Equation 5]

$$\text{Lithium hydroxide content} = (2A-B) \times \{M_{LiOH}/(20 \times 60/100)\}$$

From Equation 4 and Equation 5, $M_{Li2CO3}$ is 73.882 g/mol and $M_{LiOH}$ is 23.941 g/mol.

**Experimental Example 3: Evaluation of battery capacity and efficiency characteristics**

Manufacture of lithium secondary battery

Lithium transition metal oxides of the examples and comparative examples, Denka Black as a conductive agent, and PVDF as a binder were mixed in a mass ratio of 93:5:2 to prepare a cathode slurry. Then, the prepared cathode slurry was applied to an aluminum current collector, followed by drying and pressing the same to prepare a cathode.

Lithium metal was used as the anode.

The cathode and anode, prepared as described above, were laminated by notching them into circular shapes having a diameter of 14 mm or 16 mm, respectively, and a separation membrane (polyethylene, thickness 13 $\mu$m) notched to 19 mm was interposed between the cathode and the anode to form an electrode cell.

The electrode cell was placed in a coin cell case with a diameter of 20 mm and a height of 1.6 mm, then an electrolyte was injected therein, followed by assembly. Then, the assembled cell was aged for 12 hours or more to ensure complete impregnation of the electrolyte into the electrode.

As the electrolyte, a 1M $LiPF_6$ solution prepared by using a mixed solvent of EC/EMC (30/70; volume ratio) was used.

The secondary battery was subjected to formation charging and discharging (charging conditions: CC-CV 0.1C 4.3V 0.005C cut-off, discharging conditions: CC 0.1C 3V cut-off).

The charge capacity and discharge capacity of the secondary batteries were measured, and the battery efficiency was determined by calculating the percentage of the discharge capacity relative to the charge capacity. The measured and calculated values are shown in Table 2 below.

[TABLE 2]

|  | Charge capacity (mAh/g) | Discharge capacity (mAh/g) | Efficiency (%) |
|---|---|---|---|
| Example 1 | 243.3 | 210.8 | 86.60 |
| Example 2 | 246.9 | 216.8 | 87.80 |
| Example 3 | 247.4 | 220.0 | 88.90 |
| Example 4 | 245.5 | 219.6 | 89.50 |
| Comparative Example 1 | 242.2 | 209.2 | 86.40 |
| Comparative Example 2 | 242.5 | 215.7 | 88.95 |
| Comparative Example 3 | 242.0 | 209.5 | 86.57 |

Referring to Table 2 above, the secondary batteries of the examples exhibited improved charge and discharge efficiency, whereas the secondary batteries of the comparative examples showed reduced battery efficiency.

In addition, the secondary batteries of the examples demonstrated higher charge and discharge capacity than the secondary batteries of the comparative examples.

The contents described above are merely examples of applying the principles of the present disclosure, and other configurations may be further included without departing from the scope of the present disclosure.

**Claims**

1. A cathode active material for a secondary battery comprising lithium transition metal oxide particles which comprise nickel in a content of 80 mol% or more, based on a total number of moles of elements excluding lithium and oxygen, and cobalt,

   wherein an average content of cobalt in a surface portion of the particle, based on the total number of moles of elements excluding lithium and oxygen is higher than an average content of cobalt in a central portion of the particle, based on the total number of moles of elements excluding lithium and oxygen, and
   the particle satisfies Equation 1-1 below:

   $$[\text{Equation 1-1}]$$

   $$0.2 < |S1\text{-}S2| < 1.15$$

   (in Equation 1-1, S1 is an average slope of cobalt content in a region from a center of the particle to a point located 25% of a radius of the particle toward the surface,
   S2 is an average slope of cobalt content in a region from the surface of the particle to a point located 25% of the radius of the particle toward the center, and
   the units of S1 and S2 are mol%/$\mu$m).

2. The cathode active material for a secondary battery according to claim 1, wherein the average content of cobalt in the surface portion of the particle, based on the total number of moles of elements excluding lithium and oxygen, is 1 mol% to 10 mol%.

3. The cathode active material for a secondary battery according to claim 1 or claim 2, wherein the average content of cobalt in the central portion of the particle, based on the total number of moles of elements excluding lithium and oxygen, is 3 mol% to 9 mol%.

4. The cathode active material for a secondary battery according to any one of claims 1 to 3, wherein in Equation 1-1, S1 is 0.1 mol%/$\mu$m to 2 mol%/$\mu$m.

5. The cathode active material for a secondary battery according to any one of claims 1 to 4, wherein in Equation 1-1, S2 is 0.01 mol%/$\mu$m to 2.5 mol%/$\mu$m.

6. The cathode active material for a secondary battery according to any one of claims 1 to 5, wherein the particle satisfies Equation 1-2 below:

   $$[\text{Equation 1-2}]$$

   $$0.3 < |S1\text{-}S2| < 1$$

7. The cathode active material for a secondary battery according to any one of claims 1 to 6, wherein the particle includes a concentration gradient region between the center and the surface of the particle, and nickel has a concentration gradient in the radial direction within the concentration gradient region.

8. The cathode active material for a secondary battery according to any one of claims 1 to 7, wherein a content of residual lithium in a total weight of the lithium transition metal oxide particles is 10,000 ppm or less.

9. The cathode active material for a secondary battery according to any one of claims 1 to 8, wherein the content of lithium hydroxide in the total weight of the lithium transition metal oxide particles is 3,000 ppm or less, and the content of lithium carbonate is 6,400 ppm or less.

10. The cathode active material for a secondary battery according to any one of claims 1 to 9, wherein the average slope of the cobalt content from the surface to the center of the particle, based on the total number of moles of elements excluding lithium and oxygen, is 0.2 mol%/$\mu$m to 2 mol%/$\mu$m.

11. The cathode active material for a secondary battery according to any one of claims 1 to 10, wherein the average slope of the cobalt content from the surface to the center of the particle, based on the total number of moles of elements excluding lithium and oxygen, is 0.5 mol%/$\mu$m to 1.5 mol%/$\mu$m.

12. The cathode active material for a secondary battery according to any one of claims 1 to 11, wherein the lithium transition metal oxide particle has a single crystal structure.

13. A lithium secondary battery comprising:

a cathode which comprises the cathode active material for a secondary battery of any one of claims 1 to 12; and an anode disposed to face the cathode.

[FIG. 1]

[FIG. 2]

[FIG. 3]

Europäisches
Patentamt

European
Patent Office

Office européen
des brevets

**EUROPEAN SEARCH REPORT**

Application Number

EP 25 17 8063

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/224450 A1 (LG CHEMICAL LTD [KR]) 23 November 2023 (2023-11-23) * examples * ----- | 1-13 | INV. C01G53/506 C01G53/42 H01M4/131 |
| X | EP 4 144 703 A1 (SAMSUNG SDI CO LTD [KR]) 8 March 2023 (2023-03-08) * figures; examples; tables * ----- | 1-13 | H01M4/525 H01M10/0525 ADD. |
| X | EP 4 084 134 A1 (SM LAB CO LTD [KR]) 2 November 2022 (2022-11-02) * figures; examples; tables * ----- | 1-13 | H01M4/02 |
| X | WO 2024/096295 A1 (SM LAB CO LTD [KR]; VOLKSWAGEN AG [DE]) 10 May 2024 (2024-05-10) * figures; examples; tables * ----- | 1-13 | |
| X | EP 3 968 405 A1 (SK INNOVATION CO LTD [KR]) 16 March 2022 (2022-03-16) * figures; examples; tables * ----- | 1-13 | |

TECHNICAL FIELDS
SEARCHED (IPC)

C01G
H01M

The present search report has been drawn up for all claims

| Place of search | Date of completion of the search | Examiner |
|---|---|---|
| Munich | 22 October 2025 | Bonneau, Sébastien |

EPO FORM 1503 03.82 (P04C01)

## ANNEX TO THE EUROPEAN SEARCH REPORT
## ON EUROPEAN PATENT APPLICATION NO.

EP 25 17 8063

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2025

| Patent document cited in search report | | | Publication date | Patent family member(s) | | Publication date |
|---|---|---|---|---|---|---|
| WO 2023224450 | A1 | | 23-11-2023 | CA | 3232603 A1 | 23-11-2023 |
| | | | | CN | 117957671 A | 30-04-2024 |
| | | | | EP | 4394930 A1 | 03-07-2024 |
| | | | | JP | 2024533469 A | 12-09-2024 |
| | | | | KR | 20230162577 A | 28-11-2023 |
| | | | | US | 2024396034 A1 | 28-11-2024 |
| | | | | WO | 2023224450 A1 | 23-11-2023 |
| EP 4144703 | A1 | | 08-03-2023 | CN | 115732652 A | 03-03-2023 |
| | | | | EP | 4144703 A1 | 08-03-2023 |
| | | | | JP | 7498233 B2 | 11-06-2024 |
| | | | | JP | 2023036062 A | 13-03-2023 |
| | | | | KR | 20230033480 A | 08-03-2023 |
| | | | | US | 2023082796 A1 | 16-03-2023 |
| EP 4084134 | A1 | | 02-11-2022 | CN | 114930574 A | 19-08-2022 |
| | | | | EP | 4084134 A1 | 02-11-2022 |
| | | | | JP | 7503863 B2 | 21-06-2024 |
| | | | | JP | 2023523667 A | 07-06-2023 |
| | | | | KR | 102144056 B1 | 12-08-2020 |
| | | | | US | 2022411284 A1 | 29-12-2022 |
| | | | | WO | 2021132761 A1 | 01-07-2021 |
| WO 2024096295 | A1 | | 10-05-2024 | CN | 120476483 A | 12-08-2025 |
| | | | | EP | 4614593 A1 | 10-09-2025 |
| | | | | KR | 102523095 B1 | 18-04-2023 |
| | | | | WO | 2024096295 A1 | 10-05-2024 |
| EP 3968405 | A1 | | 16-03-2022 | CN | 114188530 A | 15-03-2022 |
| | | | | DE | 202021004086 U1 | 08-08-2022 |
| | | | | EP | 3968405 A1 | 16-03-2022 |
| | | | | KR | 20220036072 A | 22-03-2022 |
| | | | | US | 2022085367 A1 | 17-03-2022 |

EPO FORM P0459

For more details about this annex : see Official Journal of the European Patent Office, No. 12/82